# EUROPÄISCHE PATENTSCHRIFT

(11) **EP 3 554 976 B1**
(45) Veröffentlichungstag und Bekanntmachung des Hinweises auf die Patenterteilung: **09.12.2020**
(21) Anmeldenummer: 17791662.4
(22) Anmeldetag: 26.10.2017
(51) Int. Cl.: B65G 47/86

(54) **MODULARE LAGERVORRICHTUNG FÜR MINDESTENS EIN GREIFARMPAAR UND VERFAHREN ZU DESSEN MONTAGE**
MODULAR BEARING DEVICE FOR AT LEAST ONE PAIR OF GRIPPING ARMS, AND METHOD FOR ASSEMBLING SAME
DISPOSITIF SUPPORT MODULAIRE POUR AU MOINS UNE PAIRE DE BRAS PRÉHENSEURS ET SON PROCÉDÉ DE MONTAGE

(30) Priorität: 13.12.2016 WO PCT/EP2016/080810; 09.03.2017 DE 102017105016
(43) Veröffentlichungstag der Anmeldung: 23.10.2019
(73) Patentinhaber: Tyrolon-Schulnig GmbH, 6395 Hochfilzen (AT)
(72) Erfinder: SCHULNIG, Elmar, 6392 St. Jakob i.H. (AT); SCHULNIG, Ludwig, 6392 St. Jakob in Haus (AT)
(74) Vertreter: Rupprecht, Kay
(86) Internationale Anmeldenummer: PCT/EP2017/077386
(87) Internationale Veröffentlichungsnummer: WO 2018/108370

(56) Entgegenhaltungen:
- DE-A1-102014 111 564
- DE-U1- 29 501 941
- US-B1- 8 672 376

## Beschreibung

Die vorliegende Erfindung betrifft eine modulare Lagervorrichtung für mindestens ein Greifarmpaar und ein Verfahren zu dessen Montage, insbesondere auf einer Trägerplatte von einer Greif- und Transportvorrichtung für Behälter.

Greif- und Transportvorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Reinigung, Etikettierung und/oder Befüllung mit Flüssigkeiten oder anderweitigem Schüttgut vorgesehen sind.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z.B. Flaschen, Dosen oder Gläser, die jeweils den Anforderungen entsprechend aus Glas, Metall oder Kunststoff bestehen.

Unter dem Begriff "Trägerplatte" wird im Zusammenhang mit der vorliegenden Erfindung insbesondere, aber nicht ausschließlich eine kreisförmige oder kreissegmentförmige Platte verstanden, die einen Radius aufweist, welcher ein Vielfaches der Plattenstärke bzw. -dicke ist. Der Begriff "Trägerplatte" soll im Zusammenhang mit der vorliegenden Erfindung auch einen kreisförmigen oder kreissegmentförmigen Trägerring umfassen. Ein solcher Trägerring kann einen konzentrischen Innenring oder eine zum Trägerring konzentrische Innenplatte aufweisen, wobei der Innenring bzw. die Innenplatte durch radiale Streben mit dem Trägerring verbunden ist. Eine derartige Trägerplatte oder ein derartiger Trägerring kann beispielsweise aus Metall, Stahl, Aluminium oder einer Legierung bestehen. Auch möglich ist eine Trägerplatte oder ein Trägerring aus einem Kunststoff.

Unter dem Begriff "modular" bzw. "Modul" ist eine Einrichtung/Vorrichtung zu verstehen, die als eine Einheit verwendbar und insbesondere herstellbar ist, z.B. mit relativ wenigen Herstellungsschritten. Das bedeutet auch, dass die Einheit vorzugsweise einteilig ausgebildet sein kann.

Um einen Behälter zu transportieren, greift eine Greifeinrichtung mit mindestens einem Greifarmpaar normalerweise unterhalb des Halskragens, z. B. bei Flaschen, und/oder um den Bauch des Behälters. Hierbei weist ein Greifarmpaar einen ersten Greifarm und einen zweiten, zum ersten Greifarm gegengleich ausgebildeten Greifarm auf. Eine Nockensteuerwelle fungiert hierfür als Öffnungsmittel und beispielsweise eine Spiralfeder als Schließmittel der Greifeinrichtung. Es besteht aber auch die alternative Möglichkeit, dass die Nockensteuerwelle als Schließmittel und die Spiralfeder als Öffnungsmittel dient. Schlussendlich wird die Nockensteuerwelle einer Greifeinrichtung über ein Betätigungsmittel angesteuert, mit dessen Hilfe die Greifeinrichtung geöffnet und geschlossen werden kann. Neben der Spiralfeder können, je nach Positionierung zur Schwenkachse eines Greifarms, auch sich abstoßende und/oder anziehende Magnetpaare und/oder eine elastisch verformbare Zunge des Greifarms verwendet werden.

Die Greifeinrichtungen werden normalerweise konzentrisch auf einer kreisrunden Trägerplatte um die Antriebsachse bzw. Antriebswelle der Greif- und Transportvorrichtung positioniert und befestigt. Dadurch wird sichergestellt, dass nach einer bestimmten Rotationsbewegung der Trägerplatte die gleiche oder eine andere Greifvorrichtung wieder an eine selbe oder eine vorbestimmte Position gelangt, an der die Greifeinrichtung einen zu transportierenden Behälter stabil greift oder wieder freigibt. Unter anderem abhängig von der Größe der Trägerplatte, insbesondere deren Radius, kann eine maximale Anzahl von Greifeinrichtungen auf der Trägerplatte befestigt werden. Ebenfalls ist die Anzahl der Greifeinrichtungen auf der Trägerplatte sowohl von der Größe der Greifeinrichtungen selbst als auch von der Größe der zu transportierenden Behälter abhängig.

Die Massenverarbeitung von derartigen Behältern bzw. Behältnissen macht Anpassungen der Greif- und Transportvorrichtungen auf die jeweils unterschiedlichen Behältertypen und/oder Betriebsumstände notwendig. Solche Behältertypen können sich in ihrer allgemeinen Formgebung, insbesondere in ihrer Höhe, ihrer Breite bzw. ihrem Durchmesser, wesentlich voneinander unterscheiden. Die Betriebsumstände können z.B. verlangen, dass die Anzahl und/oder Art der Greifeinrichtungen geändert bzw. ausgetauscht werden. Neben derartigen Anpassungen kann es sich auch um den Austausch von defekten bzw. verschlissenen Greifarmpaaren handeln, die einen Behälter nicht mehr greifen und halten oder zumindest nicht mehr ordnungsgemäß transportieren können. Die Greifarme unterliegen einer Abnutzung bzw. einem Verschleiß und somit einer statistischen Lebensdauer, die durch die mechanische Belastung bei der Bewegung von der Öffnungsstellung in die Greifstellung und umgekehrt sowie dem Halten der Behälter zu Tage tritt. Sobald die Greifarme derart abgenutzt sind, dass sie ihre Greiffunktion nicht mehr ausführen können, müssen die Greifarme ausgetauscht werden. Dies ist der Fall, wenn sich beispielsweise Greifarme aus Metall durch die Abnutzung verbogen haben oder Greifarme aus Kunststoff zumindest teilweise abgebrochen sind.

Bei den oben genannten Situationen, in denen die Greifarme ausgetauscht und/oder angepasst werden müssen, werden die Anlagen gestoppt und die entsprechenden Greifarme händisch ausgetauscht. Diese geplanten oder ungeplanten Betriebsunterbrechungen haben eine negative Auswirkung auf die Wirtschaftlichkeit der Anlagen und sollten daher so kurz wie möglich ausfallen.

Aus der Druckschrift DE 10 2014 111 564 ist eine Lagereinheit bekannt, auf der ein Greifarmpaar angeordnet und gelagert ist. Die Lagereinheit ermöglicht einem Betreiber bzw. Unternehmen, ein Greifarmpaar im Vergleich zu anderem Stand der Technik relativ schnell auszutauschen.

Aus der US 8 672 376 B1 offenbart einen Greifer, der als Einzelkomponente ausgebildet ist, mit einem Reifenabschnitt, der gegenüberliegende Arme verbindet. Der Reifenabschnitt wird bei Verwendung zyklisch belastet und ist derart ausgebildet, um als Spannungskonzentrator für den Greifer zu wirken und einen Ausfallpunkt bereitzustellen, um bei Ausfall des Greifers einen Versagensriss im Reifenabschnitt konsequent einzuleiten. Jeder der gegenüberliegenden Arme ist an einer Basis befestigbar, so dass bei einem Ausfall die gebrochenen Teile des Greifers werden an der Basis gehalten werden. Die US 8 672 376 B1 offenbart den Oberbegriff des Anspruchs 1.

Allerdings hat der Stand der Technik weiterhin zahlreiche Nachteile. So ist z.B. die oben genannte Lagereinheit relativ groß dimensioniert und nicht besonders einfach auf einen Transportstern montierbar. Des Weiteren besteht die Lagereinheit aus einer Vielzahl von einzelnen separaten Bauteilen, die eine Handhabung beim Austausch eines Greifarmpaars erschweren.

Es ist daher die Aufgabe der vorliegenden Erfindung, eine Lagervorrichtung zu konzipieren, die die aus dem Stand der Technik bekannten Nachteile behebt oder zumindest minimiert und insbesondere ein schnelles und einfaches Montieren der Greifeinrichtungen ermöglicht sowie Angriffsflächen für Schmutz minimiert.

Diese Aufgabe wird erfindungsgemäß durch eine Lagervorrichtung nach Anspruch 1 gelöst.

Danach ist eine modulare Lagervorrichtung für mindestens ein einen ersten Greifarm und einen zweiten, zum ersten gegengleich ausgebildeten Greifarm aufweisendes Greifarmpaar vorgesehen. Hierbei ist das mindestens eine Greifarmpaar auf einer Trägerplatte sitzend zum Greifen, Halten und Führen von insbesondere flaschenartigen Behältern durch eine drehbar gelagerte Nockensteuerwelle von einer Greifstellung in eine Öffnungsstellung oder umgekehrt bewegbar. Die Lagervorrichtung ist mit einem ersten Lagerbolzen zum schwenkbaren Lagern des mindestens einen ersten Greifarms, einem zweiten Lagerbolzen zum schwenkbaren Lagern des mindestens einen zweiten Greifarms, einer Basisplatte mit einer diese durchdringenden Aufnahmeöffnung zum schwenkbaren Lagern der Nockensteuerwelle ausgebildet, wobei die Lagerbolzen auf einer Seite der Basisplatte befestigt sind. Zusätzlich ist die Lagervorrichtung zum lösbaren Befestigen auf der Trägerplatte mit einem Befestigungsmittel ausgestattet und/oder mit diesem verbindbar. Dabei ist die Lagervorrichtung dadurch gekennzeichnet, dass der erste Lagerbolzen massiv ist und der zweite Lagerbolzen als Hülse zur Aufnahme des Befestigungsmittels ausgebildet ist, dessen Durchgangsbohrung in axialer Richtung der Hülse mit einer Aufnahmeöffnung in der Basisplatte fluchtet, und dadurch, dass die Basisplatte und die Lagerbolzen einstückig ausgebildet sind.

Die erfindungsgemäße Lagervorrichtung hat den Vorteil, dass mit einer relativ geringen Anzahl von Teilen bzw. Elementen eine Vielzahl von Funktionen insbesondere gleichzeitig erfüllbar ist. Die Lagerbolzen dienen sowohl als Lagerelemente für die Greifarme als auch als Befestigungselemente auf der Trägerplatte. Zumindest ein Lagerbolzen dient auch als Aufnahmeelement für das Befestigungsmittel. Die Basisplatte fungiert mit zwei Aufnahmeöffnungen als Befestigungsbasis für die beiden Lagerbolzen, um deren Abstand und parallele Anordnung zu wahren. Zusätzlich dient die Basisplatte durch eine dritte Aufnahmeöffnung als eine Lagerung für die Nockensteuerwelle.

Ein weiterer Vorteil liegt an der kompakten Struktur, an der das mindestens eine Greifarmpaar vor einer Montage auf einer Trägerplatte angeordnet und mit den entsprechenden Schließ- und/oder Öffnungsmitteln (z.B. Federn, Magnete, etc.) vorab bestückt werden kann. Es besteht damit die Möglichkeit, entsprechende Greifeinrichtungen mit Lagervorrichtungen als Ersatzteile vor einer Wartung vorzubereiten und/oder während der Wartung schnell zusammenzusetzen.

Somit bildet die Lagervorrichtung eine kompakte und einfache Art der Befestigung mindestens eines Greifarmpaars sowie der Lagerung einer Nockensteuerwelle. Ein entsprechender Austausch eines Greifarmpaars bei einer Wartung einer Greif- und Transportvorrichtung kann im Vergleich zum Stand der Technik schneller und mit einer geringen Anzahl von Schritten erfolgen. Dadurch werden dessen Stand- und Wartungszeiten verkürzt und somit kostengünstiger und der Einsatz und Betrieb einer Greif- und Transportvorrichtung mit den erfindungsgemäßen Lagervorrichtungen verlängert und für ein Unternehmen rentabler. Auch die Herstellung der Lagervorrichtung ist aufgrund seiner geringen Anzahl von Teilen und simplen Struktur kostengünstig.

Erfindungsgemäß sind die Basisplatte und die Lagerbolzen einstückig ausgebildet. Das bedeutet, dass die Lagervorrichtung aus Basisplatte und Lagerbolzen aus einem Materialstück bestehen kann, z.B. aus einem Kunststoffspritzguss oder aus einem gefrästen/gedrehten Metallstück. Dadurch werden komplizierte und aufwendige Zusammenbauschritte für die Lagervorrichtung vermieden.

Des Weiteren kann das Befestigungsmittel eine Schraube sein, die an ihrem dem Schraubenkopf abgewandten Ende ein Gewinde aufweist, mittels dessen die Schraube unter Befestigung der Basisplatte mit dem mindestens einen Greifarmpaar in oder an der Trägerplatte lösbar befestigbar ist. Ein Gewinde ist durch einen entsprechenden Bohrer (für ein Loch) sowie einen Schneider (für einen Bolzen) schnell und einfach herstellbar und bietet eine ausreichend starke und gleichzeitig lösbare Befestigung zwischen Schraube und Aufnahmeöffnung und somit für die Lagervorrichtung.

An diesem Punkt wird darauf hingewiesen, dass die erfindungsgemäße Lagervorrichtung derart ausgelegt ist, dass diese mit einer Trägerplatte verbindbar und lösbar befestigbar ist; dies kann durch ein zusätzliches Befestigungsmittel (z.B. in Form einer Schraube) und/oder durch ein Arretierungssystem (z.B. in Form eines Bajonettverschlusses) zwischen Aufnahmeöffnung und Lagerbolzen erfolgen.

In einer alternativen Ausführungsform ist keine Aufnahmeöffnung in der Basisplatte der Lagervorrichtung vorhanden und die Basisplatte entsprechend verkleinert, da z.B. die Nockensteuerwelle kürzer ausgeformt ist und somit keiner zusätzlichen Lagerung bedarf. Ebenso kann die Aufnahmeöffnung an dem hinteren Bereich der Basisplatte ausgebildet sein, wenn die Nockensteuerwelle nicht Öffnungsmittel, sondern als Schließmittel fungiert.

Wiederum in einer alternativen Ausführungsform bedarf es bei einem der Lagerbolzen der Lagervorrichtung keiner durchgehenden Durchgangsbohrung, sondern lediglich einer von unter ausgebildeten Senkbohrung mit einem Innengewinde. Dadurch besteht die Möglichkeit, z.B. eine Schraube von der Unterseite der und durch die Trägerplatte in das Innengewinde des Lagerbolzens hineinzuschrauben und die Lagervorrichtung somit lösbar zu befestigen.

Die Erfindung betrifft ebenfalls ein Verfahren zum Montieren einer erfindungsgemäßen modularen Lagervorrichtung auf einer Trägerplatte, insbesondere eines an sich bekannten Klammersterns, wobei die Trägerplatte für das mindestens eine Greifarmpaar jeweils in axialer Richtung eine erste Aufnahmeöffnung zum Aufnehmen und Befestigen des ersten Lagerbolzens zum schwenkbaren Lagern des mindestens einen ersten Greifarms, eine zweite Aufnahmeöffnung zum Aufnehmen und Befestigen des zweiten Lagerbolzens zum schwenkbaren Lagern des mindestens einen zweiten Greifarms, und eine dritte Aufnahmeöffnung zum drehbaren Aufnehmen der Nockensteuerwelle zum Öffnen und/oder Schließen des mindestens einen Greifarmpaars aufweist. Dabei ist das Verfahren durch folgende Verfahrensschritte gekennzeichnet:
- der mindestens eine erste Greifarm und der mindestens eine zweite Greifarm werden auf die zugeordneten und einstückig mit der Basisplatte ausgebildeten ersten und zweiten Lagerbolzen aufgesteckt;
- die modulare Lagervorrichtung wird mit dem mindestens einen Greifarmpaar derart auf die Trägerplatte aufgesetzt, dass die freien Enden der Lagerbolzen in die zugeordneten Aufnahmeöffnungen einführbar oder über jenen Aufnahmeöffnungen angeordnet sind und die Basisplatte von der Trägerplatte beabstandet ist;
- das Befestigungsmittel wird von der Seite der Basisplatte ausgehend durch den als Hülse ausgebildeten zweiten Lagerbolzen gesteckt und mit dem Gewinde in oder an der Trägerplatte lösbar befestigt.

Der Vorteil des Verfahrens liegt in der geringen Anzahl an Montageschritten, die für die Befestigung einer Lagervorrichtung auf einer Trägerplatte notwendig sind. Da für die endgültige Befestigung der Lagervorrichtung auf der Trägerplatte wenige Schritte notwendig sind, kann das mindestens eine Greifarmpaar bereits in Vorbereitung auf die Montage an der Lagervorrichtung angeordnet bzw. aufgesteckt werden. Dies spart Zeit und somit Kosten für Personal bei der Inbetriebnahme und der Wartung einer Greif- und Transportvorrichtung für Behälter.

Als nächster Verfahrensschritt wird vorzugsweise die Nockensteuerwelle von der Unterseite der Trägerplatte in die der Nockensteuerwelle zugeordnete und in der Trägerplatte befindliche dritte Aufnahmeöffnung sowie in die die Basisplatte durchdringende Aufnahmeöffnung zum schwenkbaren Lagern der Nockensteuerwelle eingeführt. Dieser Schritt hat den Vorteil, dass die Nockensteuerwelle auch ohne die befestigte Lagervorrichtung in der Trägerplatte angeordnet und befestigt werden kann. Durch die Aufnahmeöffnung der Basisplatte steht der Nockensteuerwelle eine weitere Lagerung zur Verfügung, die dessen Stabilität erhöht.

Vorteilhafterweise wird als nächster Verfahrensschritt die Nockensteuerwelle in der dritten Aufnahmeöffnung der Trägerplatte drehbar gegen ein Herausfallen gesichert. Hierbei kann die Sicherung mittels eines Sicherungsstifts erfolgen. Neben der Sicherung kann dieser Schritt bzw. das entsprechende Sicherungselement auch einer Lagerung bilden, die der Nockensteuerwelle ein axiales Schwenken an einer Position erlaubt.

Weitere Einzelheiten und Vorteile der Erfindung sollen nun anhand einiger in den Zeichnungen dargestellter und bevorzugter Ausführungsbeispiele näher erläutert werden. Es zeigen:
- Figur 1a: eine perspektivische Ansicht von unten auf eine erfindungsgemäße Lagervorrichtung;
- Figur 1b: eine Unteransicht auf die Lagervorrichtung aus Fig. 1a;
- Figur 1c: eine weitere perspektivische Ansicht von unten auf die Lagervorrichtung aus Fig. 1a;
- Figur 1d: eine Seitenansicht von rechts auf die Lagervorrichtung aus Fig. 1a;
- Figur 1e: eine Vorderansicht auf die Lagervorrichtung aus Fig. 1a;
- Figur 1f: eine Seitenansicht von links auf die Lagervorrichtung aus Fig. 1a;
- Figur 1g: eine Rückansicht auf die Lagervorrichtung aus Fig. 1a;
- Figur 1h: eine perspektivische Ansicht von oben auf die Lagervorrichtung aus Fig. 1a;
- Figur 1i: eine weitere perspektivische Ansicht von oben auf die Lagervorrichtung aus Fig. 1a.
- Figur 2a: eine erfindungsgemäße Lagervorrichtung mit zwei aufgesteckten Greifarmpaaren, die auf einer Trägerplatte angeordnet ist und an der das Befestigungsmittel gelöst wurde;
- Figur 2b: die Lagervorrichtung aus Fig. 2a, beabstandet bzw. entfernt von der Trägerplatte;
- Figur 2c: eine weitere Darstellung der Fig. 2b, wobei die Greifeinrichtung mit der Lagervorrichtung und den Greifarmpaaren in einer Explosionsdarstellung gezeigt wird;
- Figur 2d: eine weitere Darstellung, die, bis auf einen aus der Trägerplatte entfernten Sicherungsstift, identisch zur Fig. 2c ist;
- Figur 2e: eine weitere Darstellung, die, bis auf eine aus der Trägerplatte herausgenommen Nockensteuerwelle, identisch zur Fig. 2d ist; und
- Figur 3: eine Draufsicht auf einen Teil einer Trägerplatte, die mit konzentrisch angeordneten Greifeinrichtungen bestückt ist.

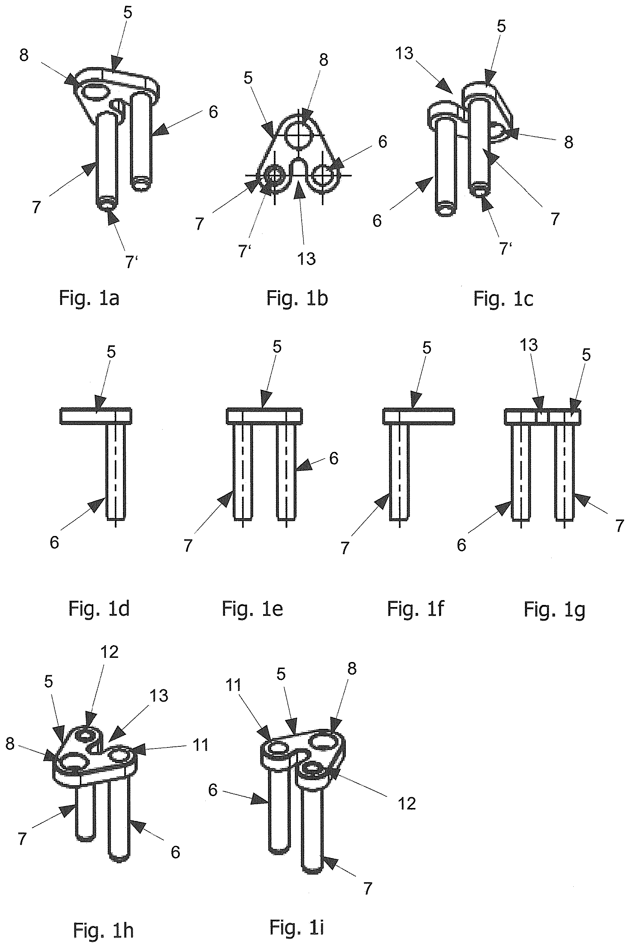

Figur 1a zeigt eine perspektivische Ansicht von unten auf eine erfindungsgemäße Lagervorrichtung, die durch eine Basisplatte 5 und zwei Lagerbolzen 6 und 7 gebildet wird. Die Basisplatte 5 ist achsensymmetrisch ausgebildet und weist eine ebene Unterseite und eine ebene Oberseite auf. In der Basisplatte 5, insbesondere an dessen vorderen Bereich, erstreckt sich eine kreisförmige Aufnahmeöffnung 8 zum Lagern einer Nockensteuerwelle von der Unterseite zur Oberseite des Basisplatte 5. Der Mittelpunkt der kreisförmigen Aufnahmeöffnung 8 liegt auf einer gedachten Symmetrieachse (nicht eingezeichnet) der Basisplatte 5. Die Lagerbolzen 6, 7 sind senkrecht zur Unterseite und parallel zueinander in der Basisplatte 5 befestigt. Des Weiteren sind die Lagerbolzen 6, 7 gleich lang und haben den gleichen Durchmesser. Aufgrund der Symmetrie haben die beiden Lagerbolzen 6, 7 den gleichen Abstand zu der gedachten Symmetrieachse der Basisplatte 5. Während der erste Lagerbolzen 6 massiv ist, ist der zweite Lagerbolzen 7 hohl und weist eine entlang seiner Achse ausgebildete Durchgangbohrung 7' vom unteren Ende bis zum oberen Ende (nicht sichtbar) auf. Am hinteren Bereich der Basisplatte 5 erkennt man eine Materialaussparung, die in den nachfolgenden Figuren im Detail beschrieben wird.

Figur 1b zeigt eine Unteransicht auf die Lagervorrichtung aus Fig. 1a. Hierbei wird die symmetrische Ausbildung der Basisplatte 5 und die symmetrische Anordnung der zuvor genannten Elemente wie die Aufnahmeöffnung 8, die Lagerbolzen 6 und 7, aber auch die der Materialaussparung 13 in der Basisplatte 5 deutlich. Die Fläche der Basisplatte 5, d.h. die Unter-/Oberseite, ist im Wesentlichen dreiecksförmig mit abgerundeten Kanten, wobei die Materialaussparung eine von der Hinterseite der Basisplatte 5 erstreckende Ausbuchtung bildet.

Figur 1c zeigt eine weitere perspektivische Ansicht von unten auf die Lagervorrichtung aus Fig. 1a, die durch die Basisplatte 5 und den beiden Lagerbolzen 6 und 7 gebildet wird.

Figur 1d zeigt eine Seitenansicht von rechts auf die Lagervorrichtung aus Fig. 1a, wobei im Wesentlichen der erste Lagerbolzen 6 und die Basisplatte 5 zu sehen sind. Der erste Lagerbolzen 6 bildet mit der Basisplatte 5 einen rechten Winkel. Die Dicke der Basisplatte 5 ist geringer als der Durchmesser des Lagerbolzen 6. Es wird darauf aufmerksam gemacht, dass die Dimensionierung der Teile und/oder Abschnitte der Lagervorrichtung vorzugsweise derart gewählt wird, dass einerseits eine stabile und andererseits eine relativ leichte Lagervorrichtung zur Verfügung steht.

Figur 1e zeigt eine Vorderansicht auf die Lagervorrichtung aus Fig. 1a mit der Basisplatte 5, dem ersten Lagerbolzen 6 und dem zweiten Lagerbolzen 7. Die Anordnung der Teile entspricht einem π (Pi-Symbol) mit zwei rechten Winkeln.

Figur 1f zeigt eine Seitenansicht von links auf die Lagervorrichtung aus Fig. 1a, die im Wesentlichen der spiegelverkehrten Figur 1d entspricht. Hierbei ist anstelle des ersten Lagerbolzen, der zweite Lagerbolzen 7 sichtbar.

Figur 1g zeigt eine Rückansicht auf die Lagervorrichtung aus Fig. 1a, die bis auf die angezeigte Materialaussparung 13 der spiegelverkehrten Figur 1e entspricht.

Figur 1h zeigt eine perspektivische Ansicht von oben auf die Lagervorrichtung aus Fig. 1a. Obwohl alle relevanten Teile der Lagervorrichtung bereits z.B. in Figur 1c genannten wurden, u.a. erster und zweiter Lagerbolzen 6, 7, Basisplatte 5, Aufnahmeöffnung 8 und Materialaussparung 13, und die Oberseite der Basisplatte 5 der Unterseite der Basisplatte 5, wie in Figur 1b entspricht, wird auf die kreisförmig angezeigten Umrisse der Aufnahmeöffnungen 11 und 12 hingewiesen. Diese Aufnahmeöffnungen 11 und 12 dienen als Befestigung für die Lagerbolzen 6 und 7 und haben vorzugsweise den gleichen Innendurchmesser.

Figur 1i zeigt eine weitere perspektivische Ansicht von oben auf die Lagervorrichtung aus Fig. 1a.

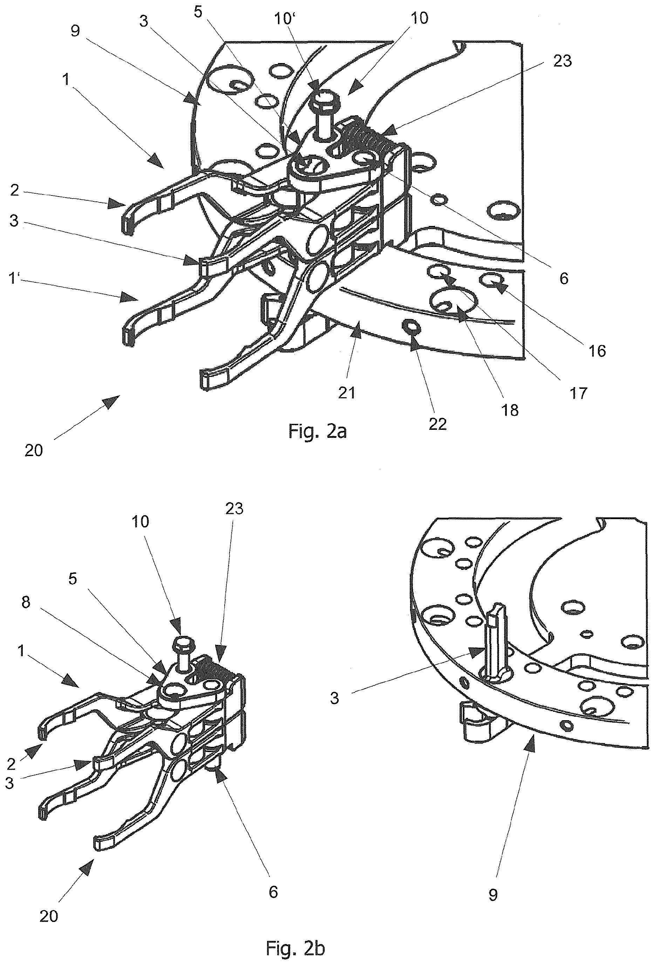

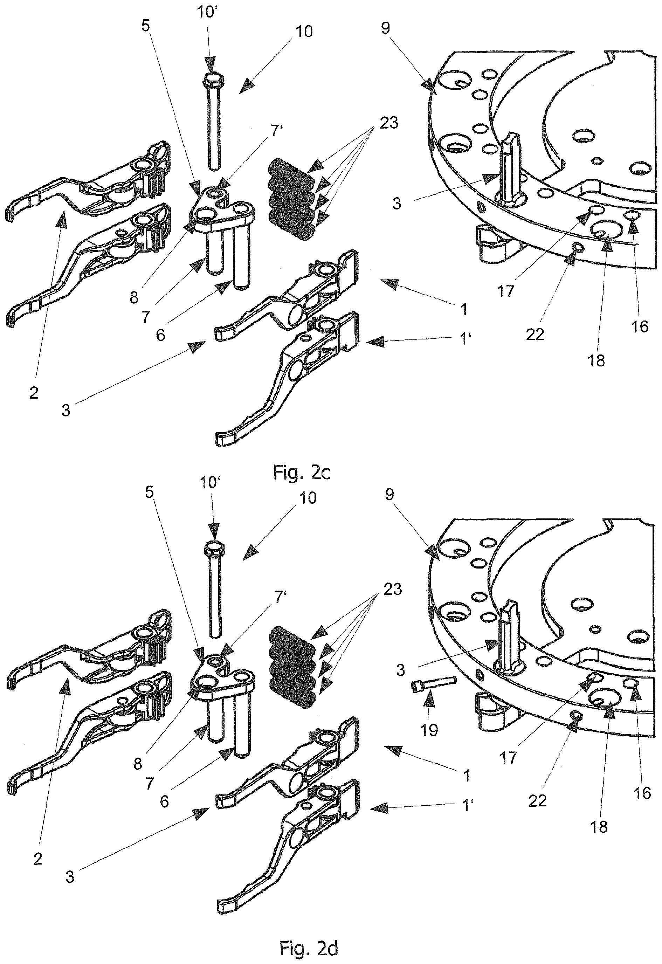

Figur 2a zeigt eine erfindungsgemäße Lagervorrichtung mit zwei aufgesteckten Greifarmpaaren 1 und 1', die auf einer Trägerplatte 9 angeordnet ist und an der das Befestigungsmittel in Form einer Schraube 10 gelöst wurde. Dies kann der erste Schritt beim Demontieren der Lagervorrichtung bzw. einer Greifeinrichtung 20 von der Trägerplatte 9 sein. Die Greifeinrichtung 20 ist die Einheit, die einen Behälter greifen, halten und transportieren kann. Hierzu weist die Greifeinrichtung 20 die erfindungsgemäße Lagervorrichtung und, in diesem Ausführungsbeispiel, zwei Greifarmpaare 1 und 1' auf. Die Lagervorrichtung wird mittels eines Befestigungsmittels in Form einer Schraube 10 mit einem Schraubenkopf 10' auf der Trägerplatte 9 lösbar befestigt. Die Greifarmpaare 1 und 1' weisen jeweils zwei Schließmittel in Form einer Feder 23 auf, die am Ende der Greifarme 2, 3, insbesondere zwischen dem ersten Greifarm 2 und dem gegengleich ausgebildeten zweiten Greifarm 3 angeordnet sind. Als Öffnungsmittel dient eine Nockensteuerwelle 3, die als Teil der Greifeinrichtung 20 angesehen werden kann, da jede Greifeinrichtung 20 einer Greif- und Transportvorrichtung seine eigene Nockensteuerwelle 3 besitzt. Die Nockensteuerwelle 3 ist in einer dritten Aufnahmeöffnung 18 der Trägerplatte 9 angeordnet und drehbar befestigt, insbesondere mittels eines Sicherungsstifts 19 (siehe später Fig. 2d). Zusätzlich ist die Nockensteuerwelle 3 in der Aufnahmeöffnung 8 der Basisplatte 5 der Lagervorrichtung drehbar lagernd angeordnet. Die beiden Lagerbolzen 6 (der zweite Lagerbolzen 7 ist nicht richtig erkennbar) der Lagervorrichtung sind in der ersten und zweiten Aufnahmeöffnungen 16 und 17 der Trägerplatte 9 angeordnet, wobei die zweite Aufnahmeöffnung 17 teilweise ein Innengewinde (nicht sichtbar) für die Schraube 10 zum Befestigen aufweist. Die genannten Aufnahmeöffnungen 16 bis 18 haben eine zylindrische Form. Der zuvor genannte Sicherungsstift 19 wird durch eine Bohrung 22 von der Außenmantelfläche 21 der Trägerplatte 9 eingesetzt und erstreckt sich mindestens bis zur dritten Aufnahmeöffnung 18.

Figur 2b zeigt die Lagervorrichtung aus Fig. 2a, beabstandet bzw. entfernt von der Trägerplatte 9. Dies kann der zweite Schritt beim Demontieren der Lagervorrichtung bzw. der Greifeinrichtung 20 von der Trägerplatte 9 sein.

Figur 2c zeigt eine weitere Darstellung der Fig. 2b, wobei die Greifeinrichtung 20 mit der Lagervorrichtung und den Greifarmpaaren 1, 1' in einer Explosionsdarstellung gezeigt wird. Dies kann als der dritte Schritt beim Demontieren der Lagervorrichtung bzw. der Greifeinrichtung 20 von der Trägerplatte 9 betrachtet werden, wobei die Greifarme 2, 3 von der Lagervorrichtung, insbesondere deren Lagerbolzen 6, 7, abgezogen wurden. Gut erkennbar sind die vier Federn 23 als Schließmittel für die beiden Greifarmpaare 1 und 1'.

Figur 2d zeigt eine weitere Darstellung, die, bis auf einen aus der Trägerplatte 9 entfernten Sicherungsstift 19, identisch zur Fig. 2c ist. Dies kann als der vierte Schritt beim Demontieren der Lagervorrichtung bzw. der Greifeinrichtung 20 von der Trägerplatte 9 betrachtet werden.

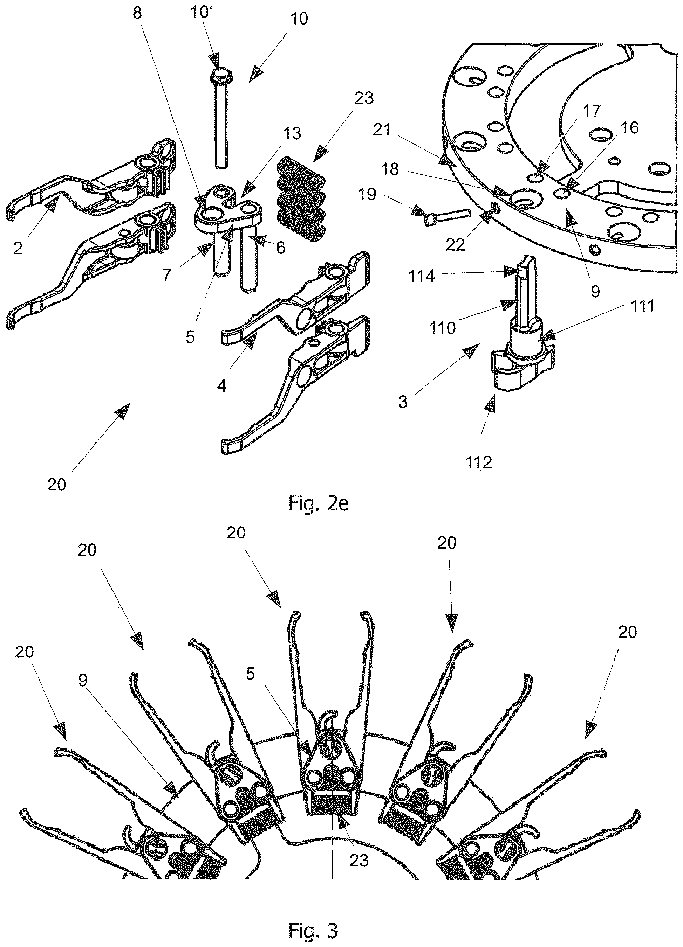

Figur 2e zeigt eine weitere Darstellung, die, bis auf eine aus der Trägerplatte 9 herausgenommen Nockensteuerwelle 3, identisch zur Fig. 2d ist. Dies kann als der fünfte Schritt beim Demontieren der Lagervorrichtung bzw. der Greifeinrichtung 20 von der Trägerplatte 9 betrachtet werden.

Die Nockensteuerwelle 3 weist einen stabförmigen oberen Abschnitt 110, einen zylindrischen Mittelabschnitt 111, und mit einem als Steuernocke zum Öffnen oder Schließen der Greifeinrichtung 2 ausgebildeten Basisabschnitt 112 auf. Der stabförmige obere Abschnitt 110 weist einen Kopfabschnitt 114 auf, dessen Durchmesser geringer als der des stabförmigen oberen Abschnitts 110 ist. Die Nockensteuerwelle 3 weist einen Basisabschnitts 112 mit einer hakenartigen Form auf.

Die Nockensteuerwelle 3 ist in die Trägerplatte 9 derart einsetzbar bzw. anordbar, dass der zylindrische Mittelabschnitt 111, der eine Höhe aufweist, welche der axialen Dicke der Trägerplatte 9 entspricht, mit dieser eine abgeschlossene bzw. zumindest teilweise abgeschlossene und/oder fluchtende Fläche bildet. Dadurch werden die Greifarmpaar 1, 1' beim Schließen in die Greifstellung nicht behindert. An den zylindrischen Mittelabschnitt 111 der Nockensteuerwelle 3 schließt sich ein oberer Abschnitt 110 sowie ein Basisabschnitt 112 an, wobei letzterer in an sich bekannter Weise beispielsweise eine zangenähnliche Form aufweist; die Form ist auch als haken- oder klauenförmig beschreibbar. Im Bereich des zylindrischen Mittelabschnitts 111 weist die Nockensteuerwelle 3 eine Tangentialnut auf (nicht sichtbar), welche mit dem Sicherungsstift 19 aus Fig. 2d in Eingriff kommt und drehbar befestigt bzw. gelagert wird. In diese Tangentialnut wird durch die Bohrung 22 der Sicherungsstift 19 geschoben, welcher zumindest teilweise ein Außengewinde aufweist, welches mit dem Innengewinde der Bohrung 22 in Eingriff kommt. Bei dem Sicherungsstift 19 kann es sich beispielsweise um eine handelsübliche Schraube, eine Innensechskant-Zylinderschraube, oder eine Madenschraube mit Innensechskantkopf handeln. Es ist selbstverständlich, dass für den Sicherungsstift 19 auch andere Bauteile, welche diese Funktion erfüllen können, in Betracht kommen. Darüber hinaus kann, nicht dargestellt, der Mittelabschnitt 111 der Nockensteuerwelle 3 alternativ zur Tangentialnut auch eine teilweise ausgebildete Ringnut aufweisen, in welcher dann der Sicherungsstift 19 radial hineinragt. Dabei ist dann die Länge der Ringnut so zu bemessen, dass sie mit dem in sie hineinragenden Sicherungsstift 19 das zum Öffnen und Schließen einer Greifvorrichtung erforderliche Hin- und Herdrehen der Nockensteuerwelle 3 ermöglicht, aber ein Herausfallen der Nockensteuerwelle 3 aus der dritten Aufnahmeöffnung 18 verhindert wird. Allerdings ist die Alternative mit der Tangentialnut wegen der gegenüber einem in radialer Richtung in eine teilweise Ringnut eingreifenden Sicherungsstift größeren Führungsfläche zwischen Sicherungsstift und Nut zu bevorzugen.

Der obere Abschnitt 110 der Nockensteuerwelle 3 ist in der abgebildeten Figur stabförmig und im Querschnitt bikonkav ausgebildet und weist einen geringeren Durchmesser als der zylindrische Mittelabschnitt 110 auf. Auch weist dieser einen Kopfabschnitt 114 auf, dessen Durchmesser geringer ist, als der des stabförmigen oberen Abschnitts 110.

Hinsichtlich der Schrittfolge beim Demontieren der Greifeinrichtung 20 kann auch zuerst der Sicherungsstift 19 (siehe Fig. 2d) aus der Trägerplatte 9 und anschließend der Steuernocken 3 entfernt werden. Danach kann die Schraube 10 und somit die Lagervorrichtung gelöst und von der Trägerplatte 9 abgenommen und die Greifarmpaare 1, 1' von dessen Lagerbolzen 6, 7 abgezogen werden.

Figur 3 zeigt eine Draufsicht auf einen Teil einer Trägerplatte 9, die mit konzentrisch angeordneten Greifeinrichtungen 20 bestückt ist. Die Greifeinrichtungen 20 sind nach außen, vom Mittelpunkt der Trägerplatte 9 weg gerichtet. Jede Greifeinrichtung 20 weist eine eigene Lagervorrichtung mit Basisplatte 5 und Lagerbolzen für die Greifarmpaare auf, wobei die Greifarmpaare mit Federn 23 als Schließmittel ausgestattet sind.

### Bezugszeichenliste

- 1: Greifarmpaar
- 1': zweites Greifarmpaar
- 2: erster Greifarm
- 3: Nockensteuerwelle
- 4: zweiter Greifarm
- 5: Basisplatte
- 6: erster Lagerbolzen
- 7: zweiter Lagerbolzen
- 7': Durchgangsbohrung
- 8: Aufnahmeöffnung zum Lagern einer Nockensteuerwelle
- 9: Trägerplatte/-ring
- 10: Befestigungsmittel
- 10': Schraubenkopf
- 11: Aufnahmeöffnung der Basisplatte für den ersten Lagerbolzen
- 12: Aufnahmeöffnung der Basisplatte für den zweiten Lagerbolzen
- 13: Materialaussparung
- 14: Gewinde
- 16: erste Aufnahmeöffnung
- 17: zweite Aufnahmeöffnung
- 18: dritte Aufnahmeöffnung
- 19: Sicherungsstift
- 20: Greifeinrichtung
- 21: Außenmantelfläche
- 22: Bohrung für Sicherungsstift
- 23: Feder
- 110: Steuerabschnitt
- 111: zylindrischer Mittelabschnitt
- 112: Basisabschnitt
- 114: Kopfabschnitt

## Patentansprüche

1. Modulare Lagervorrichtung für mindestens ein einen ersten Greifarm (2) und einen zweiten, zum ersten gegengleich ausgebildeten Greifarm (4) aufweisendes Greifarmpaar (1), welches auf einer Trägerplatte (9) sitzend zum Greifen, Halten und Führen von insbesondere flaschenartigen Behältern durch eine drehbar gelagerte Nockensteuerwelle (3) von einer Greifstellung in eine Öffnungsstellung oder umgekehrt bewegbar ist, mit einem ersten Lagerbolzen (6) zum schwenkbaren Lagern des mindestens einen ersten Greifarms (2), einem zweiten Lagerbolzen (7) zum schwenkbaren Lagern des mindestens einen zweiten Greifarms (4), einer Basisplatte (5) mit einer diese durchdringenden Aufnahmeöffnung (8) zum schwenkbaren Lagern der Nockensteuerwelle (3), wobei die Lagerbolzen (6, 7) auf einer Seite der Basisplatte (5) befestigt sind, und mit einem Befestigungsmittel (10) zum lösbaren Befestigen des mindestens einen Greifarmpaares (1) auf der Trägerplatte (9),
**dadurch gekennzeichnet, dass**
der erste Lagerbolzen (6) massiv ist und der zweite Lagerbolzen (7) als Hülse zur Aufnahme des Befestigungsmittels (10) ausgebildet ist, dessen Durchgangsbohrung (7') in axialer Richtung der Hülse mit einer Aufnahmeöffnung (11) in der Basisplatte (5) fluchtet,
und dadurch, dass die Basisplatte (5) und die Lagerbolzen (6, 7) einstückig ausgebildet sind.

2. Modulare Lagervorrichtung nach Anspruch 1,
**dadurch gekennzeichnet, dass**
das Befestigungsmittel (10) eine Schraube ist, die an ihrem dem Schraubenkopf (10') abgewandten Ende ein Gewinde (14) aufweist, mittels dessen die Schraube unter Befestigung der Basisplatte (5) mit dem mindestens einen Greifarmpaar (1) in oder an der Trägerplatte (9) lösbar befestigbar ist.

3. Verfahren zum Montieren einer modularen Lagervorrichtung nach einem der Ansprüche 1 oder 2 auf einer Trägerplatte (9), insbesondere eines an sich bekannten Klammersterns, wobei die Trägerplatte (9) für das mindestens eine Greifarmpaar (1) jeweils in axialer Richtung eine erste Aufnahmeöffnung (16) zum Aufnehmen und Befestigen des ersten Lagerbolzens (6) zum schwenkbaren Lagern des mindestens einen ersten Greifarms (2), eine zweite Aufnahmeöffnung (17) zum Aufnehmen und Befestigen des zweiten Lagerbolzens (7) zum schwenkbaren Lagern des mindestens einen zweiten Greifarms (4), und eine dritte Aufnahmeöffnung (18) zum drehbaren Aufnehmen der Nockensteuerwelle (3) zum Öffnen und/oder Schließen des mindestens einen Greifarmpaars (1) aufweist, **gekennzeichnet durch** folgende Verfahrensschritte:
der mindestens eine erste Greifarm (2) und der mindestens eine zweite Greifarm (4) werden auf die zugeordneten und einstückig mit der Basisplatte (5) ausgebildeten ersten und zweiten Lagerbolzen (6, 7) aufgesteckt;
die modulare Lagervorrichtung wird mit dem mindestens einen Greifarmpaar (1) derart auf die Trägerplatte (9) aufgesetzt, dass die freien Enden der Lagerbolzen (6, 7) in die zugeordneten Aufnahmeöffnungen (16, 17) einführbar oder über jenen Aufnahmeöffnungen (16, 17) angeordnet sind und die Basisplatte (5) von der Trägerplatte (9) beabstandet ist;
das Befestigungsmittel (10) wird von der Seite der Basisplatte (5) ausgehend durch den als Hülse ausgebildeten zweiten Lagerbolzen (6, 7) gesteckt und mit dem Gewinde (14) in oder an der Trägerplatte (9) lösbar befestigt.

4. Verfahren nach Anspruch 3,
**dadurch gekennzeichnet, dass**
als nächster Verfahrensschritt die Nockensteuerwelle (3) von der Unterseite (9') der Trägerplatte (9) in die der Nockensteuerwelle (3) zugeordnete und in der Trägerplatte (9) befindliche dritte Aufnahmeöffnung (18) sowie in die die Basisplatte (5) durchdringende Aufnahmeöffnung (8) zum schwenkbaren Lagern der Nockensteuerwelle (3) eingeführt wird.

5. Verfahren nach Anspruch 4,
**dadurch gekennzeichnet, dass**
als nächster Verfahrensschritt die Nockensteuerwelle (3) in der dritten Aufnahmeöffnung (18) der Trägerplatte (9) drehbar gegen ein Herausfallen gesichert wird.

6. Verfahren nach Anspruch 5,
**dadurch gekennzeichnet, dass**
die Sicherung mittels eines Sicherungsstifts (19) erfolgt.

## Claims

1. A modular bearing device for at least one gripper arm pair (1) comprising at least one first gripper arm (2) and one second gripper arm (4) of mirror-inverted configuration to the first seated on a support plate (9) for the gripping, holding and guiding of particularly bottle-like containers which is movable from a gripping position into an open position or vice versa by means of a rotatably mounted cam control shaft (3), having a first bearing pin (6) for the pivotal supporting of the at least one first gripping arm (2), a second bearing pin (7) for the pivotal supporting of the at least one second gripping arm (4), a base plate (5) with a receiving opening (8) running through it for the pivotal supporting of the cam control shaft (3), wherein the bearing pins (6, 7) are fixed to one side of the base plate (5), and a fixing means (10) for the releasable fixing of the at least one gripper arm pair (1) on the support plate (9),
**characterized in that**
the first bearing pin (6) is solid and the second bearing pin (7) is designed as a sleeve for receiving the fixing means (10), the through-hole (7') of which aligns with a receiving opening (11) in the base plate (5) in the axial direction of the sleeve,
and **in that** the base plate (5) and the bearing pins (6, 7) are integrally formed.

2. The modular bearing device according to claim 1,
**characterized in that**
the fixing means (10) is a screw exhibiting a thread (14) on its end opposite the screw head (10'), by means of which the screw can be releasably fastened to the at least one gripper arm pair (1) in or on the support plate (9) while fixing the base plate (5).

3. A method for assembling a modular bearing device according to one of claims 1 or 2 on a support plate (9), in particular a known per se clamping star, wherein the support plate (9) for the at least one gripper arm pair (1) in each case axially comprises a first receiving opening (16) for receiving and fixing the first bearing pin (6) for the pivotal supporting of the at least one first gripper arm (2), a second receiving opening (17) for receiving and fixing the second bearing pin (7) for the pivotal supporting of the at least one second gripper arm (4), and a third receiving opening (18) for rotatably accommodating the cam control shaft (3) for the opening and/or closing of the at least one gripper arm pair (1),
**characterized by** the following method steps:
attaching the at least one first gripper arm (2) and the at least one second gripper arm (4) to the associated first and second bearing pins (6, 7) integrally formed with the base plate (5);
placing the modular bearing device on the support plate (9) with the at least one gripper arm pair (1) such that the free ends of the bearing pins (6, 7) can be introduced into the associated receiving openings (16, 17) or arranged above said receiving openings (16, 17) and the base plate (5) distanced from the support plate (9);
inserting the fixing means (10) from the side of the base plate (5) going through the first or second bearing pin (6, 7) formed as a sleeve and releasably securing with the thread (14) in or on the support plate (9).

4. The method according to claim 3,
**characterized in that**
as the next method step, the cam control shaft (3) is introduced from the underside (9') of the support plate (9) into the third receiving opening (18) associated with the cam control shaft (3) and disposed in the support plate (9) as well as into the receiving opening (8) going through the base plate (5) for the pivotal supporting of the cam control shaft (3).

5. The method according to claim 4,
**characterized in that**
as the next method step, the cam control shaft (3) in the third receiving opening (18) of the support plate (9) is rotatably secured against falling out.

6. The method according to claim 5,
**characterized in that**
the securing ensues by means of a locking pin (19).

## Revendications

1. Dispositif support modulaire pour au moins une paire de bras de préhension (1) comprenant un premier bras de préhension (2) et un deuxième bras de préhension (4) réalisé de façon complémentaire au premier bras de préhension (2), ladite paire pouvant être déplacée depuis une position de préhension jusque dans une position d'ouverture ou inversement en reposant sur une plaque de support (9) pour la préhension, le maintien et le guidage de récipients en particulier en forme de bouteille par un arbre de commande à came (3) monté de manière rotative, comportant un premier goujon de montage (6) pour le montage pivotant dudit au moins un premier bras de préhension (2), un deuxième goujon de montage (7) pour le montage pivotant dudit au moins un deuxième bras de préhension (4), une plaque de base (5) traversée par une ouverture de réception (8) pour le montage pivotant de l'arbre de commande à came (3), les goujons de montage (6, 7) étant fixés sur un côté de la plaque de base (5), et comportant un moyen de fixation (10) pour la fixation amovible de ladite au moins une paire de bras de préhension (1) sur la plaque de support (9),
**caractérisé en ce que**
le premier goujon de montage (6) est massif et le deuxième goujon de montage (7) est réalisé sous la forme d'un manchon pour recevoir le moyen de fixation (10), dont le perçage traversant (7') est aligné dans la direction axiale du manchon avec une ouverture de réception (11) dans la plaque de base (5), et **en ce que**
la plaque de base (5) et les goujons de montage (6, 7) sont réalisés d'un seul tenant.

2. Dispositif support modulaire selon la revendication 1,
**caractérisé en ce que**
le moyen de fixation (10) est une vis qui, à son extrémité détournée de la tête de vis (10'), présente un filetage (14) à l'aide duquel la vis peut être fixée de façon amovible dans ou sur la plaque de support (9) en fixant la plaque de base (5) avec ladite au moins une paire de bras de préhension (1).

3. Procédé de montage d'un dispositif support modulaire selon l'une des revendications 1 ou 2 sur une plaque de support (9), en particulier d'une étoile de serrage connue en soi, la plaque de support (9) pour ladite au moins une paire de bras de préhension (1) présentant une première ouverture de réception (16) dans la direction axiale pour recevoir et fixer le premier goujon de montage (6) pour le montage pivotant dudit au moins un premier bras de préhension (2), une deuxième ouverture de réception (17) pour recevoir et fixer le deuxième goujon de montage (7) pour le montage pivotant dudit au moins un deuxième bras de préhension (4), et une troisième ouverture de réception (18) pour recevoir de manière rotative l'arbre de commande à came (3) pour ouvrir et/ou fermer ladite au moins une paire de bras de préhension (1),
**caractérisé par** les étapes suivantes consistant à :
enficher ledit au moins un premier bras de préhension (2) et ledit au moins un deuxième bras de préhension (4) sur les premier et deuxième goujons de montage (6, 7) associés réalisés d'un seul tenant avec la plaque de base (5);
rapporter le dispositif support modulaire sur la plaque de support (9) avec ladite au moins une paire de bras de préhension (1) de telle sorte que les extrémités libres des goujons de montage (6, 7) peuvent être insérées dans les ouvertures de réception (16, 17) associées ou peuvent être disposées au-dessus de ces ouvertures de réception (16, 17) et que la plaque de base (5) est espacée de la plaque de support (9) ;
enficher le moyen de fixation (10) depuis le côté de la plaque de base (5) à travers le deuxième goujon de montage (6, 7) réalisé sous la forme d'un manchon et le fixer de manière amovible dans ou sur la plaque de support (9) au moyen du filetage (14).

4. Procédé selon la revendication 3,
**caractérisé par** l'étape suivante consistant à :
insérer l'arbre de commande à came (3) depuis le côté inférieur (9') de la plaque de support (9) dans la troisième ouverture de réception (18) associée à l'arbre de commande à came (3) et située dans la plaque de support (9), ainsi que dans l'ouverture de réception (8) traversant la plaque de base (5) pour le montage pivotant de l'arbre de commande à came (3).

5. Procédé selon la revendication 4,
**caractérisé par** l'étape suivante consistant à :
bloquer de façon mobile en rotation l'arbre de commande à came (3) dans la troisième ouverture de réception (18) pour éviter qu'il ne tombe.

6. Procédé selon la revendication 5,
**caractérisé en ce que**
le blocage est assuré au moyen d'une goupille de verrouillage (19).
